# EUROPÄISCHE PATENTSCHRIFT

(11) **EP 2 739 836 B1**
(45) Veröffentlichungstag und Bekanntmachung des Hinweises auf die Patenterteilung: **24.08.2016**
(21) Anmeldenummer: 12727822.4
(22) Anmeldetag: 06.06.2012
(51) Int. Cl.: F02D 19/08, F02M 31/125, F02M 35/10, F02M 43/04, F02M 53/06, F02M 69/04, F02D 41/06, F02D 41/30

(54) **EINSPRITZVORRICHTUNG, BRENNKRAFTMASCHINE UND VERFAHREN ZUM BETRIEB EINER BRENNKRAFTMASCHINE**
INJECTION DEVICE, INTERNAL COMBUSTION ENGINE, AND METHOD FOR OPERATING AN INTERNAL COMBUSTION ENGINE
DISPOSITIF D'INJECTION, MOTEUR À COMBUSTION INTERNE, ET PROCÉDÉ PERMETTANT DE FAIRE FONCTIONNER UN MOTEUR À COMBUSTION INTERNE

(30) Priorität: 03.08.2011 DE 102011080346
(43) Veröffentlichungstag der Anmeldung: 11.06.2014
(73) Patentinhaber: Robert Bosch GmbH, 70442 Stuttgart (DE)
(72) Erfinder: WINDBERGS, Thor, 71732 Tamm (DE)
(86) Internationale Anmeldenummer: PCT/EP2012/060747
(87) Internationale Veröffentlichungsnummer: WO 2013/017321

(56) Entgegenhaltungen:
- EP-A2- 1 382 826
- WO-A1-00/61927
- DE-A1-102008 001 606
- DE-A1-102008 016 376
- DE-A1-102009 000 894
- US-A- 5 465 701
- US-A1- 2008 060 621

## Beschreibung

### Stand der Technik

Die Erfindung geht aus von einer Einspritzvorrichtung nach dem Oberbegriff des Anspruchs 1.

Solche Einspritzvorrichtungen zum Einspritzen von Kraftstoff für Brennkraftmaschinen sind allgemein bekannt. Beispielsweise ist aus der Druckschrift DE 2 158 117 A1 eine Brennkraftmaschine mit einer Drosselregelung bekannt, bei welcher Kraftstoff mittels einer Einspritzvorrichtung in das in einen Brennraum der Brennkraftmaschine führende Ansaugrohr eingespritzt wird, wobei der Kraftstoff vor der Einspritzung mittels einer elektrischen Kraftstoffheizung erwärmt wird, um die Verdampfung des Kraftstoffs nach der Einspritzung zu verbessern. Es handelt sich hierbei um einen Ottomotor mit Saugrohreinspritzung, welcher mit einem auf Benzin basierendem Kraftstoff betrieben wird.

Ferner ist beispielsweise aus der Druckschrift DE 10 2009 000 894 A1 bekannt, Brennkraftmaschinen nicht nur mit auf Benzin basierenden Kraftstoffen zu betreiben, sondern Brennkraftmaschinen zusätzlich oder ausschließlich auch mit alternativen Kraftstoffen, wie beispielsweise (Bio-)Ethanol, komprimiertem Erdgas (CNG, Compressed Natural Gas) oder Flüssiggas (LNG, Liquefied Natural Gas) zu speisen. Bei der Verwendung derartiger Kraftstoffe ergeben sich jedoch erhebliche Kaltstartprobleme. Insbesondere bei der Verwendung eines aus 100% Bio-Ethanol bestehenden Kraftstoffes kommt es - abhängig von den jeweiligen Motoreigenschaften - schon unterhalb einer Temperaturgrenze von circa 15° C zu erheblichen Startschwierigkeiten, wodurch ferner hohe Abgasraten in der Kaltstartphase gebildet werden.

### Offenbarung der Erfindung

Die erfindungsgemäße Einspritzvorrichtung, die erfindungsgemäße Brennkraftmaschine und das erfindungsgemäße Verfahren zum Betrieb einer Einspritzvorrichtung gemäß den nebengeordneten Ansprüchen haben gegenüber dem Stand der Technik den Vorteil, dass die Brennkraftmaschine auch bei niedrigen Temperaturen sowohl mit einem auf Ethanol basierendem Kraftstoff, als auch mit einem weiteren Kraftstoff zu betreiben ist. Insbesondere wird die Kaltstartfähigkeit bei der Verwendung des auf Ethanol basierenden Kraftstoffs verbessert, so dass beide Kraftstoffzusammensetzungen gleichberechtigt nebeneinander und unabhängig von der Außentemperatur einsetzbar sind. Die erste Kraftstoffzusammensetzung umfasst vorzugsweise (Bio-)Ethanol bzw. ein Benzin-Ethanol-Gemisch. Vor dem Einspritzen wird die erste Kraftstoffzusammensetzung mittels der Heizvorrichtung vorgeheizt und anschließend oder gleichzeitig mittels des ersten Kraftstoffventils eingespritzt, so dass ein Start der Brennkraftmaschine allein mittels des auf Ethanol basierenden Kraftstoff auch bei niedrigen Temperaturen ermöglicht wird. Ferner wird ein Betrieb der Brennkraftmaschine zusätzlich oder ausschließlich mit Kraftstoff der zweiten Kraftstoffzusammensetzung möglich, wobei die zweite Kraftstoffzusammensetzung vorzugsweise einen konventionellen Kraftstoff, wie Benzin oder Diesel umfasst. Alternativ ist aber grundsätzlich auch denkbar, dass als zweite Kraftstoffzusammensetzung komprimiertes Erdgas (CNG, Compressed Natural Gas) oder Flüssiggas (LNG, Liquefied Natural Gas) Verwendung findet. Vorteilhafterweise ist mit der erfindungsgemäßen Einspritzvorrichtung ein äußerst flexibler Betrieb der Brennkraftmaschine möglich, da mehr als ein Kraftstoff- und Einspritzsystem miteinander kombiniert wird (auch als Bifuel- oder FlexFuel-System bezeichnet). Die Brennkraftmaschine umfasst vorzugsweise einen Ottomotor mit Benzin-Direkt- oder Benzin-Saugrohreinspritzung oder einen Dieselmotor mit Diesel-Direkt- oder Diesel-Saugrohreinspritzung, welcher zusätzlich die Saugrohr- oder Direkteinspritzung der zweiten auf Ethanol basierenden Kraftstoffzusammensetzung aufweist. Eine solche Kombination ist insbesondere im Nutzfahrzeugbereich denkbar. Die Heizvorrichtung umfasst vorzugsweise eine elektrische Heizung in Form eines elektrischen Widerstandsdrahtes.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform ist vorgesehen, dass das zweite Einspritzventil eine Einspritzdüse zum Einspritzen von Kraftstoff einer auf Dieselkraftstoff basierenden zweiten Kraftstoffzusammensetzung umfasst. In vorteilhafter Weise ist die Brennkraftmaschine somit wahlweise mit Ethanol oder Diesel zu betreiben. Insbesondere wird somit eine Nutzung von auf Ethanol basierenden Kraftstoffen im Nutzfahrzeugbereich möglich. Ferner ist eine Reduktion der Abgasemissionen erzielbar.

Gemäß einer bevorzugten Ausführungsform ist vorgesehen, dass das zweite Einspritzventil zum Einspritzen unter einem höheren Einspritzdruck als das erste Einspritzventil ausgebildet ist. In vorteilhafter Weise wird somit ein Einspritzen von Diesel unter Hochdruck ermöglicht, wobei gleichzeitig der auf Ethanol basierende Kraftstoff mit optimierbaren niedrigerem Druck einspritzbar ist. Alternativ wäre grundsätzlich aber auch denkbar, dass das erste und zweite Einspritzventil bei nahezu gleichem Einspritzdruck arbeiten. Das Einspritzen des Kraftstoffs der ersten und/oder zweiten Kraftstoffzusammensetzung erfolgt bevorzugt bei einem Druck zwischen 3,8 und 5,0 bar und besonders bevorzugt bei im Wesentlichen 4,2 bar.

Gemäß einer bevorzugten Ausführungsform ist vorgesehen, dass die Heizvorrichtung eine in eine zentrale Kraftstoffversorgungsleitung für das erste Einspritzventil integrierte Heizeinheit umfasst. Auf diese Weise lässt sich die Ausbildung der Einspritzvorrichtung vorzugsweise an die jeweiligen Begebenheiten des im Fahrzeug zur Verfügung stehenden Bauraums adaptieren. Vorzugsweise ist die Heizeinheit in das erste Einspritzventil integriert, so dass mittels des ersten Einspritzventils sowohl das Vorheizen, als auch das Einspritzen des Kraftstoffs erfolgt.

Gemäß einer bevorzugten Ausführungsform ist vorgesehen, dass das erste und das zweite Einspritzventil unabhängig voneinander ansteuerbar sind und/oder wobei das erste Einspritzventil und das zweite Einspritzventil für unterschiedliche Kraftstoffdurchflussmengen dimensioniert sind, wobei vorzugsweise das erste Einspritzventil für einen höheren_Kraftstoffdurchflussbereich als das zweite Einspritzventil dimensioniert ist. In vorteilhafter Weise ist somit eine Anpassung des jeweiligen Einspritzventils an den einzuspritzenden Kraftstofftyp möglich. Ferner wird durch eine unterschiedliche Dimensionierung und eine getrennte Ansteuerung der Einspritzventile der jeweilige Zumessbereich der Einspritzventilanordnung optimiert, so dass eine präzise Einspritzung ermöglich wird. Durch eine präzise Dosierung der eingespritzten Kraftstoffmenge wird ferner eine bessere und fehlerfreie Durchbrennung erzielt, wodurch beispielsweise eine zuverlässige Kaltstartphase und geringere Emissionsraten zu gewährleisten sind.

Gemäß einer bevorzugten Ausführungsform ist vorgesehen, dass das erste Einspritzventil derart angeordnet ist, dass der Kraftstoff der ersten Kraftstoffzusammensetzung mittels des ersten Einspritzventils in ein Saugrohr der Brennkraftmaschine und/oder direkt in einen Brennraum der Brennkraftmaschine eingespritzt wird und/oder wobei das zweite Einspritzventil derart angeordnet ist, dass der Kraftstoff der zweiten Kraftstoffzusammensetzung mittels des zweiten Einspritzventils in das Saugrohr der Brennkraftmaschine und/oder direkt in den Brennraum der Brennkraftmaschine eingespritzt wird. In vorteilhafter Weise lässt sich das kombinierte Antriebskonzept somit sowohl bei Brennkraftmaschinen mit Direkteinspritzung, als auch bei Brennkraftmaschinen mit Saugrohreinspritzung verwenden.

Gemäß einer bevorzugten Ausführungsform ist vorgesehen, dass sowohl das erste Einspritzventil als auch das zweite Einspritzventil im Saugrohr angeordnet sind, wobei das zweite Einspritzventil entlang des Saugrohrs vorzugsweise zwischen dem ersten Einspritzventil und dem Brennraum angeordnet ist. In vorteilhafter Weise wird somit eine vorgelagerte Diesel-Einspritzung erzielt, welche besonders bevorzugt mit optimierten Spray-Targeting kombiniert wird, um eine reduzierte Abgasemission in der Kaltstartphase zu erzielen.

Gemäß einer bevorzugten Ausführungsform ist vorgesehen, dass das erste Einspritzventil zum Einspritzen des Kraftstoffs der ersten Kraftstoffzusammensetzung sowohl in Richtung eines zwischen dem Saugrohr und dem Brennraum angeordneten ersten Einlassventils, als auch in Richtung eines zwischen dem Saugrohr und dem Brennraum angeordneten zweiten Einlassventils konfiguriert ist und/oder wobei das zweite Einspritzventil zum Einspritzen des Kraftstoffs der zweiten Kraftstoffzusammensetzung sowohl in Richtung des ersten Einlassventils, als auch in Richtung des zweiten Einlassventils konfiguriert ist. Durch das Einspritzen jeweils in Richtung des ersten und zweiten Einlassventils wird gerade in der Start- und Warmlaufphase eine homogene und stabile Durchbrennung des eingespritzten Kraftstoffs begünstigt, da in Richtung jedes Einspritzventils nur eine verminderte Durchflussmenge von Kraftstoff eingespritzt werden braucht. Hierdurch ergibt sich eine geringere Spraydichte, d.h. dass sich die charakteristische Tröpfchengröße, insbesondere der Sauter-Durchmesser, des zerstäubten Kraftstoffs in vorteilhafter Weise verringert und der Anteil verdampften Kraftstoffs im Saugrohr erhöht, wodurch eine schnellere und stabilere Durchbrennung des Kraftstoffgemischs im Brennraum erzielt wird. Alternativ ist denkbar dass das zweite Einspritzventil ein erstes Ventil zum Einspritzen des Kraftstoffs der ersten Kraftstoffzusammensetzung in Richtung des ersten Einlassventils und ein zweites Ventil zum Einspritzen des Kraftstoffs der ersten Kraftstoffzusammensetzung in Richtung des zweiten Einlassventils aufweist.

Ein weiterer Gegenstand der vorliegenden Erfindung ist eine Brennkraftmaschine aufweisend eine erfindungsgemäße Einspritzvorrichtung. In vorteilhafter Weise ist die erfindungsgemäße Brennkraftmaschine gleichberechtigt mit beiden Kraftstofftypen und unabhängig von der Außentemperatur zu betreiben.

Ein weiterer Gegenstand der vorliegenden Erfindung ist eine Verfahren zum Betrieb einer erfindungsgemäßen Einspritzvorrichtung für eine Brennkraftmaschine, wobei in die Brennkraftmaschine wahlweise Kraftstoff der zweiten Kraftstoffzusammensetzung mittels des zweiten Einspritzventils eingespritzt wird und/oder Kraftstoff der ersten Kraftstoffzusammensetzung mittels der Heizvorrichtung vorgeheizt und mittels des ersten Einspritzventils eingespritzt wird. Auf diese Weise wird ein Betrieb der Brennkraftmaschine mit unterschiedlichen Kraftstoffen ermöglicht, wobei einer der Kraftstoff auf Ethanol basiert, ohne dass hierdurch die Kaltstarteigenschaften beeinträchtigt werden.

Ausführungsbeispiele der vorliegenden Erfindung sind in den Zeichnungen dargestellt und in der nachfolgenden Beschreibung näher erläutert.

### Kurze Beschreibung der Zeichnungen

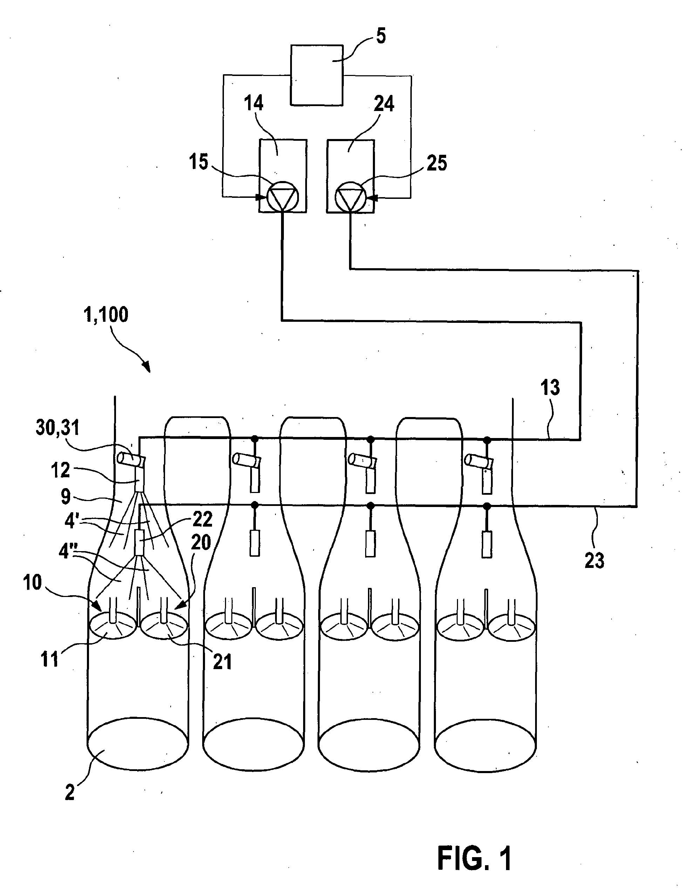

Figur 1 zeigt eine schematische Ansicht einer Einspritzvorrichtung und einer Brennkraftmaschine aufweisend eine Einspritzvorrichtung gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist eine schematische Ansicht einer Einspritzvorrichtung 1 und zumindest teilweise einer Brennkraftmaschine 100 gemäß einer beispielhaften Ausführungsform der vorliegenden Erfindung dargestellt. Die abgebildete Brennkraftmaschine 100 weist beispielhaft vier Zylinder auf. Jeder der vier Zylinder umfasst einen Brennraum 2, in welchem sich ein nicht dargestellter Kolben bewegt. Die Wandung eines jeden Brennraums 2 weist jeweils eine erste Einlassöffnung 10 und eine zweite Einlassöffnung 20 auf, durch welche ein Luft-Kraftstoff-Gemisch durch ein Saugrohr 9 in die Brennkammer 2 angesaugt wird. Jeder Brennraum 2 weist ferner nicht dargestellte Auslassöffnungen auf, durch welche die Rohabgase des verbrannten Luft-Kraftstoff-Gemischs aus den Brennkammern 2 ausgestoßen werden. Jeder der Zylinder weist ferner ein erstes Einlassventil 11, welches zum Verschließen der jeweiligen ersten Einlassöffnung 10 vorgesehen ist, und ein zweites Einlassventil 21 auf, welches zum Verschließen der zweiten Einlassöffnung 20 vorgesehen ist. Die Einspritzvorrichtung 1 umfasst für jeden Zylinder ein im Saugrohr 9 angeordnetes erstes Einspritzventil 12 zum Einspritzen von Kraftstoff 4' einer ersten Kraftstoffzusammensetzung. Die erste Kraftstoffzusammensetzung umfasst im vorliegenden Beispiel (Bio-) Ethanol, welches in Form zweier Sprühkegel in Richtung der ersten Einlassöffnung 10 und der zweiten Einlassöffnung 20 in das Saugrohr 9 der Brennkraftmaschine 100 gespritzt wird. Durch die erste und zweite Einlassöffnung 10, 20 gelangt der Kraftstoff 4' der ersten Kraftstoffzusammensetzung in den Brennraum 2, in welchem sich somit ein entzündliches Luft-Ethanol-Gemisch bildet. Zur Verbesserung der Kaltstareigenschaften weist die Einspritzvorrichtung 1 eine Heizvorrichtung 30 auf, welche zum Vorheizen des mittels des ersten Einspritzventils 12 eingespritzten Kraftstoffs der ersten Kraftstoffzusammensetzung dient. Die Heizvorrichtung 30 umfasst erfindungsgemäß eine in eine zentrale Kraftstoffversorgungsleitung (40) for das erste Einspritzventil (12) integrierte Heizeinheit (31).

Die Einspritzvorrichtung 1 umfasst ferner ein zweites Einspritzventil 22 zum Einspritzen von Kraftstoff 4" einer sich von der ersten Kraftstoffzusammensetzung unterscheidenden zweiten Kraftstoffzusammensetzung. Das zweite Einspritzventil 22 ist entlang einer zum Saugrohr 9 parallelen Richtung zwischen dem Brennraum 2 und dem ersten Einspritzventil 12 angeordnet. Das zweite Einspritzventil 12 umfasst im vorliegenden Beispiel eine Einspritzdüse zum Einspritzen von Dieselkraftstoff in das Saugrohr. Der Dieselkraftstoff 4" ,wird dabei unter hohem Druck eingespritzt, d.h. insbesondere unter einem höheren Druck als der auf Ethanol basierende Kraftstoff 4' der ersten Kraftstoffzusammensetzung durch das erste Einspritzventil 12 eingespritzt wird. Der Dieselkraftstoff 4" wird dabei in Form von zwei Sprühkegeln in Richtung der ersten Einlassöffnung 10 und in Richtung der zweiten Einlassöffnung 20 in das Saugrohr 9 eingespritzt, wodurch sich im Brennraum 2 ein entzündliches Luft-Diesel-Gemisch bildet.

Das erste Einspritzventil 12 wird dabei über ein erstes Leitungssystem 13 mittels einer ersten Kraftstoffpumpe 15 mit Kraftstoff 4' der ersten Kraftstoffzusammensetzung aus einem ersten Kraftstofftank 14 gespeist. Das zweite Einspritzventil 22 wird über ein separates und vom ersten Leitungssystem 13 unabhängiges zweites Leitungssystem 23 mittels einer zweiten Kraftstoffpumpe 25 aus einem zweiten Kraftstofftank 24 mit Dieselkraftstoff 4" gespeist. Die zweite Kraftstoffpumpe 25 sorgt dabei für eine entsprechend hohe Verdichtung des Dieselkraftstoffs 4".

Die Brennkraftmaschine 100 kann wahlweise ausschließlich mittels des auf Ethanol basierenden Kraftstoffs 4' oder mittels Dieselkraftstoff 4" betrieben werden. Denkbar ist aber auch ein Mischbetrieb aus beiden Kraftstoffen. Eine mit der der erste Kraftstoffpumpe 15, der zweiten Kraftstoffpumpe 25, dem ersten Einspritzventil 12 und dem zweiten Einspritzventil 22 elektrisch verbundene Steuerschaltung 5 steuert die erste und zweite Kraftstoffpumpe 15, 25 bzw. das erste und zweite Einspritzventil 12, 22 entsprechend.

## Patentansprüche

1. Einspritzvorrichtung (1) für eine Brennkraftmaschine (100) aufweisend ein erstes Einspritzventil (12) zum Einspritzen von Kraftstoff (4') einer einen Ethanol-Anteil umfassenden ersten Kraftstoffzusammensetzung und ein separates zweites Einspritzventil (22) zum Einspritzen von Kraftstoff (4") einer sich von der ersten Kraftstoffzusammensetzung unterscheidenden zweiten Kraftstöffzusammensetzung, **dadurch gekennzeichnet, dass** die Einspritzvorrichtung (1) eine Heizvorrichtung (30) zum Vorheizen ausschließlich des mittels des ersten Einspritzventils (12) eingespritztem Kraftstoffs (4') der ersten Kraftstoffzusammensetzung aufweist, wobei das erste Einspritzventil (12) weiter vom Brennraum (2) der Brennkraftmaschine (100) entfernt angeordnet ist als das zweite Einspritzventil (22), und wobei die Heizvorrichtung (30) eine in eine zentrale Kraftstoffversorgungsleitung (40) für das erste Einspritzventil (12) integrierte Heizeinheit (31) umfasst.

2. Einspritzvorrichtung (1) nach Anspruch 1, wobei das zweite Einspritzventil (22) eine Einspritzdüse zum Einspritzen von Kraftstoff (4") einer auf Dieselkraftstoff basierenden zweiten Kraftstoffzusammensetzung umfasst.

3. Einspritzvorrichtung (1) nach einem der vorhergehenden Ansprüche, wobei das zweite Einspritzventil (22) zum Einspritzen unter einem höheren Einspritzdruck als das erste Einspritzventil (12) ausgebildet ist.

4. Einspritzvorrichtung (1) nach einem der vorhergehenden Ansprüche, wobei das erste und das zweite Einspritzventil (12, 22) unabhängig voneinander ansteuerbar sind und/oder wobei das erste Einspritzventil (12) und das zweite Einspritzventil (22) für unterschiedliche Kraftstoffdurchflussmengen dimensioniert sind, wobei vorzugsweise das erste Einspritzventil (12) für einen höheren Kraftstoffdurchflussbereich als das zweite Einspritzventil (22) dimensioniert ist.

5. Einspritzvorrichtung (1) nach einem der vorhergehenden Ansprüche, wobei das erste Einspritzventil (12) derart angeordnet ist, dass der Kraftstoff (4') der ersten Kraftstoffzusammensetzung mittels des ersten Einspritzventils (12) in ein Saugrohr (9) der Brennkraftmaschine (100) und/oder direkt in einen Brennraum (2) der Brennkraftmaschine (100) eingespritzt wird und/oder wobei das zweite Einspritzventil (22) derart angeordnet ist, dass der Kraftstoff (4") der zweiten Kraftstoffzusammensetzung mittels des zweiten Einspritzventils (22) in das Saugrohr (9) der Brennkraftmaschine (100) und/oder direkt in den Brennraum (2) der Brennkraftmaschine (100) eingespritzt wird.

6. Einspritzvorrichtung (1) nach einem der vorhergehenden Ansprüche, wobei sowohl das erste Einspritzventil (12) als auch das zweite Einspritzventil (22) im Saugrohr (9) angeordnet sind, wobei das erste Einspritzventil (12) entlang des Saugrohrs (9) vorzugsweise zwischen dem zweiten Einspritzventil (22) und dem Brennraum (2) angeordnet ist.

7. Einspritzvorrichtung (1) nach einem der vorhergehenden Ansprüche, wobei das erste Einspritzventil (12) zum Einspritzen des Kraftstoffs (4') der ersten Kraftstoffzusammensetzung sowohl in Richtung eines zwischen dem Saugrohr (9) und dem Brennraum (2) angeordneten ersten Einlassventils, als auch in Richtung eines zwischen dem Saugrohr (9) und dem Brennraum (2) angeordneten zweiten Einlassventils konfiguriert ist und/oder wobei das zweite Einspritzventil (22) zum Einspritzen des Kraftstoffs (4") der zweiten Kraftstoffzusammensetzung sowohl in Richtung des ersten Einlassventils, als auch in Richtung des zweiten Einlassventils konfiguriert ist

8. Brennkraftmaschine (100) aufweisend eine Einspritzvorrichtung (1) nach einem der vorhergehenden Ansprüche.

9. Verfahren zum Betrieb einer Einspritzvorrichtung (1) für eine Brennkraftmaschine (100) nach einem der Ansprüche 1 bis 9, wobei in die Brennkraftmaschine (100) wahlweise Kraftstoff (4") der zweiten Kraftstoffzusammensetzung mittels des zweiten Einspritzventils (22) eingespritzt wird und/oder Kraftstoff (4') der ersten Kraftstoffzusammensetzung mittels der Heizvorrichtung (30) vorgeheizt und mittels des ersten Einspritzventils (12) eingespritzt wird.

## Claims

1. Injection device (1) for an internal combustion engine (100), having a first injection valve (12) for injecting fuel (4') of a first fuel composition, which comprises an ethanol fraction, and having a separate, second injection valve (22) for injecting fuel (4") of a second fuel composition, which differs from the first fuel composition, **characterized in that** the injection device (1) has a heating device (30) for pre-heating only the fuel (4') of the first fuel composition, which is injected by way of the first injection valve (12), wherein the first injection valve (12) is arranged further remote than the second injection valve (22) from the combustion chamber (2) of the internal combustion engine (100), and wherein the heating device (30) comprises a heating unit (31) which is integrated into a central fuel supply line (40) for the first injection valve (12).

2. Injection device (1) according to Claim 1, wherein the second injection valve (22) comprises an injection nozzle for injecting fuel (4") of a second fuel composition which is based on diesel fuel.

3. Injection device (1) according to one of the preceding claims, wherein the second injection valve (22) is designed for performing the injection at a higher injection pressure than the first injection valve (12).

4. Injection device (1) according to one of the preceding claims, wherein the first and the second injection valve (12, 22) are actuable independently of one another, and/or wherein the first injection valve (12) and the second injection valve (22) are dimensioned for different fuel throughflow rates, wherein preferably, the first injection valve (12) is dimensioned for a higher fuel throughflow range than the second injection valve (22).

5. Injection device (1) according to one of the preceding claims, wherein the first injection valve (12) is arranged such that the fuel (4') of the first fuel composition is injected by way of the first injection valve (12) into an intake pipe (9) of the internal combustion engine (100) and/or directly into a combustion chamber (2) of the internal combustion engine (100), and/or wherein the second injection valve (22) is arranged such that the fuel (4") of the second fuel composition is injected by way of the second injection valve (22) into the intake pipe (9) of the internal combustion engine (100) and/or directly into the combustion chamber (2) of the internal combustion engine (100).

6. Injection device (1) according to one of the preceding claims, wherein both the first injection valve (12) and the second injection valve (22) are arranged in the intake pipe (9), wherein, as viewed along the intake pipe (9), the first injection valve (12) is arranged preferably between the second injection valve (22) and the combustion chamber (2).

7. Injection device (1) according to one of the preceding claims, wherein the first injection valve (12) is configured for injecting the fuel (4') of the first fuel composition both in the direction of a first inlet valve which is arranged between the intake pipe (9) and the combustion chamber (2) and in the direction of a second inlet valve which is arranged between the intake pipe (9) and the combustion chamber (2), and/or wherein the second injection valve (22) is configured for injecting the fuel (4") of the second fuel composition both in the direction of the first inlet valve and in the direction of the second inlet valve.

8. Internal combustion engine (100) having an injection device (1) according to one of the preceding claims.

9. Method for operating an injection device (1) for an internal combustion engine (100) according to one of Claims 1 to 9, wherein, selectively, fuel (4'') of the second fuel composition is injected by way of the second injection valve (22), and/or fuel (4') of the first fuel composition is preheated by way of the heating device (30) and injected by way of the first injection valve (12), into the internal combustion engine (100).

## Revendications

1. Dispositif d'injection (1) pour un moteur à combustion interne (100), présentant une première soupape d'injection (12) pour l'injection de carburant (4') ayant une première composition de carburant comprenant une proportion d'éthanol et une deuxième soupape d'injection séparée (22) pour l'injection de carburant (4") ayant une deuxième composition de carburant différente de la première composition de carburant, **caractérisé en ce que** le dispositif d'injection (1) présente un dispositif de chauffage (30) pour préchauffer exclusivement le carburant (4') ayant la première composition de carburant injecté au moyen de la première soupape d'injection (12), la première soupape d'injection (12) étant disposée à une plus grande distance de la chambre de combustion (2) du moteur à combustion interne (100) que la deuxième soupape d'injection (22), et le dispositif de chauffage (30) comprenant une unité de chauffage (31) intégrée dans une conduite d'alimentation en carburant centrale (40) pour la première soupape d'injection (12).

2. Dispositif d'injection (1) selon la revendication 1, dans laquelle la deuxième soupape d'injection (22) comprend une buse d'injection pour l'injection de carburant (4") ayant une deuxième composition de carburant à base de carburant diesel.

3. Dispositif d'injection (1) selon l'une quelconque des revendications précédentes, dans lequel la deuxième soupape d'injection (22) est réalisée pour effectuer une injection à une pression d'injection plus élevée que la première soupape d'injection (12).

4. Dispositif d'injection (1) selon l'une quelconque des revendications précédentes, dans lequel la première et la deuxième soupape d'injection (12, 22) peuvent être commandées indépendamment l'une de l'autre et/ou dans lequel la première soupape d'injection (12) et la deuxième soupape d'injection (22) sont dimensionnées pour différents débits de carburant, de préférence la première soupape d'injection (12) étant dimensionnée pour une plage de débit de carburant plus élevée que la deuxième soupape d'injection (22).

5. Dispositif d'injection (1) selon l'une quelconque des revendications précédentes, dans lequel la première soupape d'injection (12) est disposée de telle sorte que le carburant (4') ayant la première composition de carburant soit injecté au moyen de la première soupape d'injection (12) dans un conduit d'admission (9) du moteur à combustion interne (100) et/ou directement dans une chambre de combustion (2) du moteur à combustion interne (100) et/ou dans lequel la deuxième soupape d'injection (22) est disposée de telle sorte que le carburant (4") ayant la deuxième composition de carburant soit injecté au moyen de la deuxième soupape d'injection (22) dans le conduit d'admission (9) du moteur à combustion interne (100) et/ou directement dans la chambre de combustion (2) du moteur à combustion interne (100).

6. Dispositif d'injection (1) selon l'une quelconque des revendications précédentes, dans lequel à la fois la première soupape d'injection (12) et la deuxième soupape d'injection (22) sont disposées dans le conduit d'admission (9), la première soupape d'injection (12) étant disposée le long du conduit d'admission (9), de préférence entre la deuxième soupape d'injection (22) et la chambre de combustion (2).

7. Dispositif d'injection (1) selon l'une quelconque des revendications précédentes, dans lequel la première soupape d'injection (12) est configurée pour injecter le carburant (4') ayant la première composition de carburant à la fois dans la direction d'une première soupape d'admission disposée entre le conduit d'admission (9) et la chambre de combustion (2) et dans la direction d'une deuxième soupape d'admission disposée entre le conduit d'admission (9) et la chambre de combustion (2), et/ou dans lequel la deuxième soupape d'injection (22) est configurée pour injecter le carburant (4") ayant la deuxième composition de carburant à la fois dans la direction de la première soupape d'admission et dans la direction de la deuxième soupape d'admission.

8. Moteur à combustion interne (100) présentant un dispositif d'injection (1) selon l'une quelconque des revendications précédentes.

9. Procédé pour faire fonctionner un dispositif d'injection (1) pour un moteur à combustion interne (100) selon l'une quelconque des revendications 1 à 9, dans lequel, de manière sélective, dans le moteur à combustion interne (100), du carburant (4") ayant la deuxième composition de carburant est injecté au moyen de la deuxième soupape d'injection (22) et/ou du carburant (4') ayant la première composition de carburant est préchauffé au moyen du dispositif de chauffage (30) et est injecté au moyen de la première soupape d'injection (12).
